# EUROPEAN PATENT APPLICATION

(11) **EP 2 946 660 A1**
(43) Date of publication of application: **25.11.2015**
(21) Application number: 15168073.3
(22) Date of filing: 19.05.2015
(51) Int. Cl.: A01K 23/00

(54) **DEVICE FOR THE COLLECTION OF DOG FECES**

(30) Priority: 23.05.2014 IT SV20140003
(71) Applicant: Forgione, Enzo, 17031 Albenga (SV) (IT)
(72) Inventor: Forgione, Enzo, 17031 Albenga (SV) (IT)
(74) Representative: Karaghiosoff, Giorgio Alessandro

(57) **Abstract**

Device for collecting dog feces, composed of a first part (2) fastenable to the body of the dog (1) and of a second collecting part.

The first part has a first hole (3), which hole (30) with the first part (2) in the fastened condition, is placed at the anal orifice of the dog, the second part being composed of a container of the bag type or the like placed at said hole (30).

## Description

The present invention relates to a device for collecting dog feces.

The problem of collecting dog feces is becoming more and more important above all due to the popularity of dogs.

Such problem has a particularly important aspect in cities where there are not enough parks or green places where dogs can defecate.

The aim of the present invention is to provide a device for collecting feces of dogs or of other animals in general, that guarantees feces to be easily collected while limiting encumbrances and promoting the portability thereof.

Moreover the device of the present invention besides preventing the dog from defecating on streets and pavements, allows the embarrassment of the dog owner to be got out of, he/she having to manage to clean up without the possibility of making it in an easy and complete manner thus compromising the environmental hygiene and the health safety of people that, encountering the residual waste, carry parts of fecal material by their shoes in their homes.

The present invention achieves the above aims by providing a device for collecting dog feces composed of a first part fastenable to the dog body and of a second collecting part.

The first part has a first hole that with the first part in the fastened condition, is placed at the anal orifice of the dog, the second part comprising a container of the bag type or the like at the hole.

Therefore by using such device the animal is forced to defecate into the second part, in order to prevent streets and particularly pavements and pedestrian crossings from getting dirty.

The arrangement just described is obviously the most general arrangement of the present invention, but different embodiments are possible that will be disclosed below also by means of some shown examples.

The aims of the present embodiments are mainly intended to improve the ease-of-use of the device.

Ease-of-use means both an improvement in the portability of the device, and the fact of being easier to fasten it to the animal.

Moreover a particularly important aspect is the fastening of the second part to the first part, since the second part has to be easily detachable from the first part without requiring the use of further tools and preventing the dog owner from getting dirty.

The variant embodiments that will be described below are directed to achieve such aims.

These and other characteristics and advantages of the present invention will be more clear from the following description of some embodiments shown in the annexed drawings wherein:
Fig. 1 is a possible embodiment of the device of the present invention;
Fig.2 is a perspective view of a dog wearing the device of the present invention;

Fig.3 is a possible embodiment of the device of the present invention.

It is specified that the embodiment described below and shown in the figures has to be intended merely for explanatory purposes in order to better understand the advantages of the present invention.

Therefore such embodiment has not to be intended as a limitation of the inventive concept of the present invention, that is to provide a device for collecting feces particularly efficient and easy to use.

As anticipated, in its more general arrangement, the device of the present invention is composed of a first part fastenable to the dog body and of a second collecting part.

The first part has a first hole, that is placed at the anal orifice of the dog with the first part in the fastened condition.

The second part comprises a container of the bag type or the like placed at said hole.

Particularly the first part is composed of an element wearable as clothes, which clothes are worn by the dog such to be fastened to its body.

The clothes can be composed of any clothes for dogs known in the prior art, such as coats, raincoats, etc.

The figures shown here below describe the embodiment wherein the first part is composed of underpants, but it is specified that the described characteristics are adaptable to any clothes for dogs known in prior art.

Moreover it is possible to provide the underpants described here below to be fastenable to the clothes, such as coats or the like by any means known in the prior art, such as for example zip fasteners or the like.

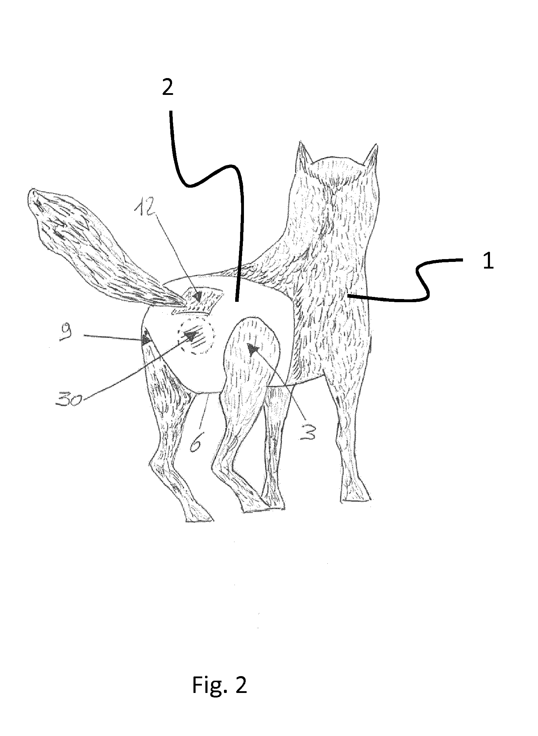

With a particular reference to figure 2, preferably the first part is composed of underpants 2 worn on the rear part of the body of the dog 1.

The underpants 2 have the first hole 30 at the anal orifice of the dog 1 and at least one further hole for each rear leg of the dog.

Particularly the underpants 2 have a hole 3 for the rear right leg and one hole 9 for the rear left leg.

In order to facilitate its wearability and in order to give the dog as little nuisance as possible, the underpants 2 may have further holes.

According to the embodiment shown in figure 2, the underpants 2 have a rear hole 12 for the tail of the dog 1.

Moreover it is possible to provide a front hole 6 for the urinary system.

As an alternative to the hole for the urinary system it is possible to provide to use underpants 2 that provide a layer of absorbing material at the urinary system.

Preferably the second part comprises a precompressed bag, namely a bag folded on itself, such to reduce encumbrance.

Obviously the bag provides its aperture placed at the anal orifice of the dog.

Such bag will automatically open during defecation, due to the weight of the feces.

For example it is possible to provide a bellows bag that in the empty condition is firmly folded on itself.

Obviously such bag may be made of any material, but preferably it is made of plastic or cellulose material.

Similarly also the underpants 2 may be made of any material.

According to a first embodiment, the first part is made as one piece with the second part.

Such arrangement allows a disposable device to be made, preferably made of a cheap material such as cellulose or the like.

Moreover according to a possible improvement of the variant embodiment just described it is possible to provide the second part to be fastened to the first part by means of a pre-perforation that makes it easier to tear the second part with respect to the first part.

In this case the second part can immediately be removed without the slightest nuisance for the dog, postponing the removal of the first part, that is the underpants 2, to the most suitable moment.

As an alternative to the arrangement as a single piece, it is possible to provide the second part to be fastened to the first part by means of fastening elements.

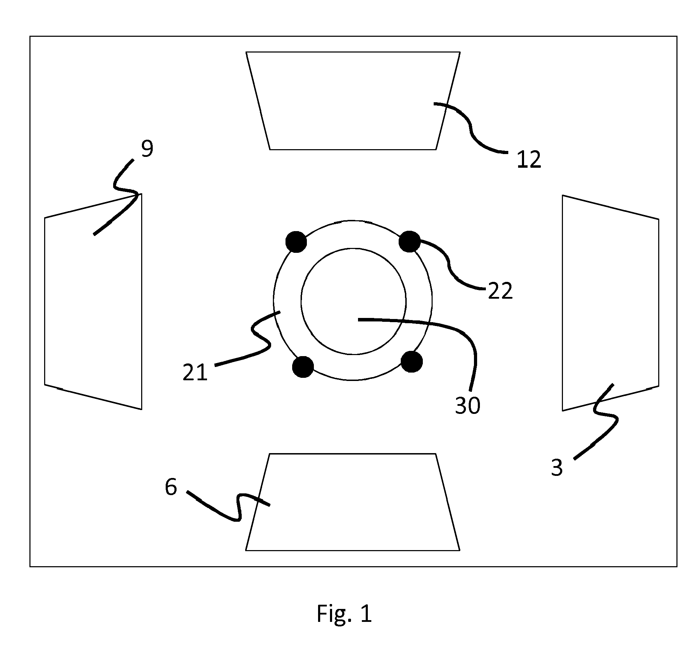

Figure 1 shows a first possible embodiment, according to which the fastening elements are composed of a rigid ring 21, surrounding the first hole 30 and it is fastened to the first part such to allow at least a part of the bag to fit between the first part and the rigid ring 21.

In this case the rigid ring 21 is fastened to the underpants 2, that is the first part, by means of elastic means, particularly elastic threads.

The elastic threads are sewn to the fabric of the underpants 2, preferably at four locations 22 corresponding to the diagonals such to guarantee the best compromise between sewing points and fastening of the ring 21.

As it clearly results from figure 2 and from the previous description, the ring 21 creates a housing area where a part of the bag can be fastened.

Preferably it is possible to fasten the bag such that the edges of the inlet aperture of the bag are fastened to the rigid ring.

Thus during defecation, the bag automatically unrolls due to the weight of the feces, however remaining firmly fastened to the rigid ring 21 by its own aperture placed at the anal orifice of the dog.

As an alternative to such arrangement it is possible to provide the fastening elements to be composed of a housing pocket fastened to the first part, intended to house the bag.

Advantageously the housing pocket is composed at least partially of an elastic material such that the pocket can be elastically deformed while inserting the bag.

In order to facilitate the insertion of the bag, it is possible to provide in the housing pocket a rear aperture in communication with the first hole.

Thus once the bag is placed, during the defecation, the bag can deploy towards said aperture coming out from the housing pocket.

As an alternative or in combination with such last variant described, it is possible to provide a side slot for inserting the bag inside the pocket.

In this case the rear aperture may be used for deploying the bag, while the side slot for inserting it.

Therefore it is clear how the housing pocket is preferably fastened at the anal orifice of the dog.

According to a further embodiment it is possible to provide the fastening elements to be composed of first fastening elements provided integral with the first part, cooperating with corresponding second fastening elements, provided integral with said second part.

According to such arrangement the first fastening elements would remain attached to the underpants 2 even once defecation is ended, while the second fastening elements would remain attached to the second part, namely the bag.

Obviously such configuration provides different arrangements of the fastening elements, intended to allow the first part to be removably fastened to the second part, which all fall within the subject matter of the present invention.

According to a first embodiment the first and second fastening elements are composed of two strips of Velcro material.

The strips of the Velcro material can be sewn or glued to the first and second part.

As an alternative to what described now, the first fastening elements may be composed of buttons cooperating with corresponding second fastening elements.

Advantageously the second fastening elements can be composed of buttonholes.

It is also possible for the second fastening elements to be composed of buttons and the first fastening elements to be composed of buttonholes.

It is further possible to provide the first and second fastening elements to be composed of snap fasteners.

As a further embodiment it is possible to provide the first and second fastening elements to be composed of two magnetic elements cooperating with each other such to fasten the first part to the second part.

Finally all the other fastening systems intended to fasten a first part to a second part that are known in the prior art can be implemented, such as for example elements of the zip-fastener type or the like.

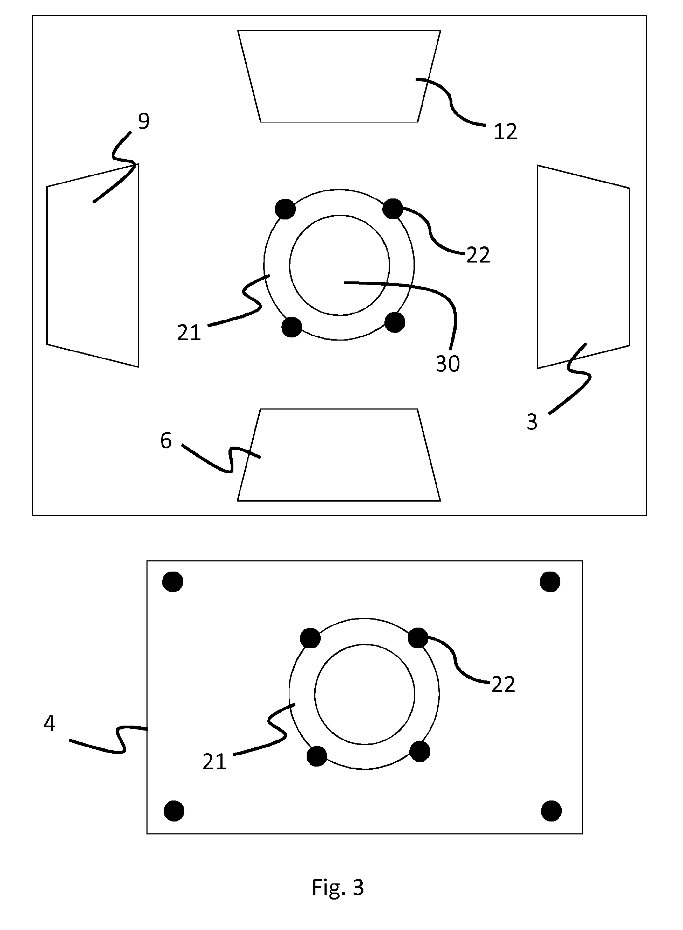

Figure 3 shows a further embodiment of the device of the present invention.

According to such embodiment there is provided a housing pocket 4 fastenable to the underpants 2.

The housing pocket 4 has a rigid ring 21 that can be made according to one or more of the characteristics described above.

Particularly the figure shows a view of the housing pocket 4 that points out the part of the housing pocket in contact with the anal orifice of the dog.

Therefore the housing pocket 4 can have a hole for deploying the bag during the defecation by the dog.

As described above, according to the variant shown in figure 3, the bag is kept in position by the rigid ring 21.

As an alternative it is possible to provide the housing pocket 4 not to have any rigid ring 21 and the bag to be inserted between the underpants and the pocket and fastened in position by means of fastening means that block in position the housing pocket 4 with the underpants.

The housing pocket 4 can be fastened to the first part by any fastening means.

Therefore the fastening means can be made according to one or more of the characteristics about the fastening elements described above.

In this case and with reference to the previous description, the first fastening elements will be integral with the first part, while the second fastening elements will be integral with the housing pocket 4.

Accordingly the housing pocket 4 may be fastened to the first part by buttons, or by strips of Velcro material.

As an alternative or in combination with the characteristics mentioned above it is possible to provide the housing pocket to be at least partially sewn to the first part and fastened to the remaining part by one of the fastening means just described.

Finally it is specified that the housing pocket 4 can be made as the other variant embodiment of the housing pocket described above, namely a housing pocket having at least one rear aperture in communication with the first hole 30.

Preferably the housing pocket 4 is composed of elastic material such to keep in position the bag without the need of using the rigid ring 21, as described above.

The elastic housing pocket in this case may also have a side aperture for the insertion of the bag, such as described above.

Similarly to what said above, also in this case the elastic housing pocket may be fastened to the first part by means of the fastening means described for the housing pocket with the rigid ring 21.

Finally according to a further embodiment, it is specified that the housing pocket 4 can be made of fabric, elastic or not, as well as the underpants to be worn by the animal.

## Claims

1. Device for collecting dog feces,
**characterized in that**
it is composed of a first part (2) fastenable to the dog body (1) and of a second collecting part,
the first part (2) having a first hole (30), which hole (30) with the first part in the fastened condition, is placed at the anal orifice of the dog,
the second part comprising a container of the bag type or the like placed at said hole (30).

2. Device according to claim 1, wherein said first part (2) is composed of a wearable element (2) made as clothes, which clothes are worn by the dog such to be fastened to its body.

3. Device according to claim 2, wherein said wearable element is composed of underpants (2) worn on the rear part of the body of the dog (1), said underpants (2) having said first hole (30) at the anal orifice of the dog and at least one further hole (3, 9) for each rear leg of the dog.

4. Device according to claim 1, wherein the first part (2) is made as one piece with the second part.

5. Device according to claim 1, wherein said second part is fastened to said first part (2) by means of fastening elements.

6. Device according to claim 5, wherein said fastening elements are composed of a rigid ring (21), which ring (21) surrounds said first hole (30) and is fastened to said first part (2) such to allow at least a part of said bag to fit between said first part (2) and the rigid ring (21).

7. Device according to claim 6, wherein said rigid ring (21) is fastened to said first part (2) by means of elastic means, such as elastic threads or the like.

8. Device according to claim 5, wherein said fastening elements are composed of a housing pocket fastened to said first part (2), intended to house said bag.

9. Device according to claim 5, wherein said fastening elements are composed of a housing pocket (4) fastenable to said first part (2), intended to house said bag.

10. Device according to claim 8 or claim 9, wherein said housing pocket has at least one rear aperture in communication with said first hole (30).

11. Device according to claim 5, wherein said fastening elements are composed of first fastening elements provided integral with the first part (2), cooperating with corresponding second fastening elements, provided integral with said second part.

12. Device according to claim 11, wherein said first and second fastening elements are composed of two strips of Velcro material.

13. Device according to claim 11, wherein said first fastening elements are composed of buttons cooperating with the corresponding second fastening elements.

14. Device according to claim 9, wherein said housing pocket (4) has a rigid ring (21) made according to the claims 6 and/or 7.

15. Device according to claim 8 or claim 9, wherein said housing pocket (4) is fastened to said first part (2) by means of fastening means, which fastening means are made according to one or more of the characteristics of the claims 11 to 13 about said fastening elements.
